# EUROPÄISCHE PATENTSCHRIFT

(11) **EP 2 115 857 B1**
(45) Veröffentlichungstag und Bekanntmachung des Hinweises auf die Patenterteilung: **06.12.2017**
(21) Anmeldenummer: 08708189.9
(22) Anmeldetag: 25.01.2008
(51) Int. Cl.: H02K 3/28, H02K 29/03, H02K 21/14

(54) **18/8-SYNCHRONMOTOR**
18/8 SYNCHRONOUS MOTOR
MOTEUR SYNCHRONE 18/8

(30) Priorität: 30.01.2007 DE 102007004561
(43) Veröffentlichungstag der Anmeldung: 11.11.2009
(73) Patentinhaber: Robert Bosch GmbH, 70442 Stuttgart (DE)
(72) Erfinder: ROTH, Karl-Juergen, 71701 Schwieberdingen (DE); REUTLINGER, Kurt, 70174 Stuttgart (DE)
(86) Internationale Anmeldenummer: PCT/EP2008/050852
(87) Internationale Veröffentlichungsnummer: WO 2008/092801

(56) Entgegenhaltungen:
- JP-A- 10 243 621
- US-A- 4 918 347
- US-A- 5 424 902
- US-A1- 2002 047 460

## Beschreibung

Die Erfindung betrifft einen 18/8-Synchronmotor mit 8 Rotorpolen und 18 Statorzähnen, insbesondere für den Einsatz bei elektrischen Lenkhilfen.

Bei elektrischen Antrieben für Lenksysteme mit elektromechanischer Unterstützung für den Einsatz in Kraftfahrzeugen ist es erforderlich, dass die Schwankungsbreite des an der Welle erzeugten Antriebsmomentes sehr gering ist. Üblicherweise werden als solche Antriebe permanenterregte elektronisch kommutierte Synchronmotoren verwendet, da diese aufgrund ihrer Leistungsdichte, ihrem Wirkungsgrad und ihrer Regelmöglichkeit für diese Anwendungen bevorzugt sind. Bei elektronisch kommutierten Synchronmotoren entstehen jedoch durch Oberwellen so genannte Oberwellenmomente, die zu starken Schwankungen des Drehmoments führen können. Deshalb müssen solche Antriebe derart gestaltet werden, dass diese Oberwellen möglichst reduziert oder in ihrer Auswirkung auf den Drehmomentenverlauf gering sind. Weiterhin treten bei diesen Synchronmaschinen Drehmomentschwankungen nicht nur unter Last auf, sondern auch bei stromloser Statorwicklung, die als Rastmoment bezeichnet werden.

Eine gängige Methode, Rastmomente in Synchronmotoren zu reduzieren, besteht darin, das Verhältnis einer Statornutzahl zur Polzahl so zu wählen, dass das kleinste gemeinsame Vielfache möglichst groß wird. Dies wird beispielsweise bei einem Synchronmotor mit 9 Statorzähnen im Stator und 8 Rotorpolen erreicht. Dabei ergeben sich 72 Raststellungen pro Umdrehung mit geringer Rastmomentamplitude.

Ein solcher Synchronmotor reagiert jedoch sehr empfindlich auf Abweichungen von der Symmetrie, d.h. schon kleine Abweichungen führen zu erheblichen Rastmomenten und Drehmomentenschwankungen.

Zudem bilden sich beim Betrieb erhebliche Radialkraftwellen aus, die zu verstärkter Geräuschbildung führen können. Aufgrund von Fertigungstoleranzen ist eine absolute bauliche Symmetrie nicht erreichbar und eine Reduzierung der Toleranzen würde den Aufwand bei der Herstellung erheblich erhöhen.

Mit der US 4,918,347 A1 ist ein Elektromotor mit einem Stator bekannt geworden, der eine Vielzahl von Statorzähnen und Statorlücken aufweist. Bei der gezeigten Drehstromwicklung umfasst jede Statorspule drei Statorzähne, wobei mehrere Spulen zu einer Phase zusammengefasst werden können.

Die JP 102 43 621 A zeigt ebenfalls eine elektrische Maschine mit einem eine Vielzahl Statorzähne aufweisenden Stator. Die Statorspulen umfassen hier jeweils immer nur genau einen Polzahn, wobei mehrere Statorspulen zu einer gemeinsamen Phase zusammengefasst werden.

Es ist Aufgabe der vorliegenden Erfindung, eine Synchronmaschine zur Verfügung zu stellen, die unter Beibehaltung der geringen Rastmomente und Momentenwelligkeit eine geringere Empfindlichkeit bezüglich Abweichungen von der Symmetrie aufweist und bei der die Radialkraftwellen deutlich reduziert sind.

Diese Aufgabe wird durch den Synchronmotor nach Anspruch 1 gelöst.

Weitere vorteilhafte Ausgestaltungen der Erfindung sind in den abhängigen Ansprüchen angegeben.

Gemäß einem Aspekt ist ein Synchronmotor mit einem Stator mit 18 Statorzähnen vorgesehen, die von Statorspulen umschlossen werden. 8 Polmagnete sind am Rotor angeordnet. Jede der Statorspulen umschließt mindestens zwei Statorzähne.

Die 18/8-Konfiguration des Synchronmotors der vorliegenden Erfindung verbindet die Vorteile einer 9/8-Konfiguration eines permanenterregten Synchronmotors mit einer größeren Unempfindlichkeit gegenüber baulichen Abweichungen von der Symmetrie mit einer erheblichen Reduzierung der Radialkraftwellen. Dies wird realisiert, indem bezüglich der 9/8-Konfiguration die Anzahl der Statorzähne verdoppelt wird und jede der Statorspulen um mindestens zwei der Statorzähne gelegt ist. Weiterhin sind jeweils drei Statorspulen, die drei zueinander benachbarte Statorzahnpaare umschließen, in Reihe zu einer Dreiergruppe verschaltet und, bevorzugt über Ansteueranschlüsse mit einer gemeinsamen Phase ansteuerbar.

Vorzugsweise ist jeder Statorzahn der Synchronmaschine von mindestens zwei Statorspulen umschlossen, die jeweils weiterhin die dem entsprechenden Statorzahn beiderseits benachbarten Statorzähne umschließen. Insbesondere können die Statorspulen, die einen Statorzahn umschließen, einen zueinander entgegen gesetzten Wicklungssinn aufweisen. Dies führt dazu, dass der Anteil der Radialkräfte, die durch Statorspulen um einen der Statorzähne hervorgerufen werden, sich zumindest teilweise gegeneinander aufheben. Dadurch können die beim Betrieb des Synchronmotors auftretenden Radialkraftwellen reduziert werden.

Vorzugsweise können jeweils um 120° am Stator zueinander versetzte Dreiergruppen über drei Phasenanschlüsse ansteuerbar sein und jeweils in einer Teilsternschaltung verschaltet sein .

Gemäß weiteren Ausführungsformen sind die Teilsternschaltungen entweder mit zwei Umrichtern oder mit einem gemeinsamen Umrichter verbunden.

Es kann vorgesehen sein, dass jeweils um 120° am Stator zueinander versetzte Dreiergruppen über drei Phasenanschlüsse ansteuerbar sind und jeweils in einer Teildreiecksschaltung verbunden sind.

Weiterhin können die Teildreiecksschaltungen entweder mit zwei Umrichtern oder mit einem gemeinsamen Umrichter verbunden sein.

Gemäß einem Beispiel, welches das Verständnis der Erfindung erleichtert ("Beispiel") sind die Statorspulen eines ersten Teilsystems von acht Statorzähnen und die Statorspulen eines zweiten Teilsystems von acht weiteren, den acht Statorzähnen gegenüberliegenden Statorzähnen einander nicht überlappend angeordnet, wobei die Statorspulen des ersten und des zweiten Teilsystems Statorspulen umfassen, die drei Statorzähne umschließen.

Gemäß einem weiteren Beispiel können die Statorspulen eines der Teilsysteme in einer Dreiergruppe von drei in Reihe geschalteten Statorspulen an zu einander benachbarten Statorzahnpaaren und in zwei Zweiergruppen von jeweils einer Statorspule mit einfacher Windungszahl um drei Statorzähne und einer Statorspule mit doppelter Windungszahl um zwei Statorzähne, die in Reihe geschaltet sind, angeordnet sein.

Gemäß einem Beispiel können die Dreiergruppe und die zwei Zweiergruppen von Statorspulen jedes der Teilsysteme in getrennten Teilsternschaltungen oder Teildreiecksschaltungen miteinander verschaltet sein und jeweils dreiphasig über einen gemeinsamen Umrichter oder voneinander getrennte Umrichter ansteuerbar sein.

Bevorzugte Ausführungsformen der vorliegenden Erfindung werden nachfolgend anhand der beigefügten Zeichnungen näher erläutert. Es zeigen:
- Fig. 1: eine Querschnittsdarstellung eines 18/8-Synchronmotors gemäß einer Ausführungsform der Erfindung;
- Fig. 2: eine Darstellung der Statorspulen bezüglich der verschiedenen Phasen in einer übersichtlichen Darstellung;
- Fig. 3: eine Darstellung von sechs Spulengruppen, die gemäß den Figuren nachfolgenden Anordnungen verschaltet werden;
- Figuren 4 bis 7: verschiedene Verschaltungen der Statorspulen des Synchronmotors gemäß der Erfindung; und
- Fig. 8: eine mögliche Ausgestaltung des Synchronmotors nach Fig. 4 bis Fig. 7, bei dem zwei Spulenanordnungen getrennt voneinander auf zwei Hälften des Synchronmotors angeordnet sind.

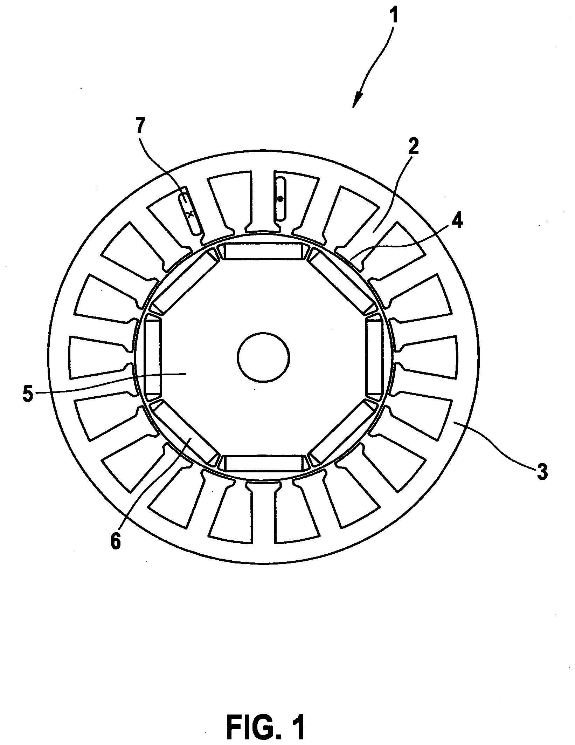

Fig. 1 zeigt einen Querschnitt durch einen Synchronmotor 1 gemäß einer Ausführungsform der Erfindung. Der Synchronmotor 1 ist mit 18 Statorzähnen und 8 Polen aufgebaut, und wird nachfolgend als 18/8-Synchronmotor bezeichnet. Die Statorzähne 2 sind an einem Stator 3 angeordnet, so dass ihre jeweiligen Zahnköpfe 4 zu einem gemeinsamen Mittelpunkt weisen, wobei deren jeweilige Mittelachse in radialer Richtung um einen vorzugsweise den kreisförmigen Stator 2 umgebenden Mittelpunkt verlaufen. Weiterhin sind die Statorzähne 2 gleichmäßig, d.h. mit gleichem Abstand (Versatzwinkel) voneinander im Inneren des Stators 3 angeordnet.

Im Inneren des Stators 3 befindet sich weiterhin ein Rotor 5, dessen Drehachse dem Mittelpunkt entspricht. Der Rotor 5 weist acht Polmagnete 6 (Permanentmagnete) auf, die gleichmäßig um den Umfang verteilt angeordnet sind. Zueinander benachbarte Polmagnete 6 weisen eine zueinander entgegengesetzte Polung auf, so dass sich jeweils zwei gleichgerichtete Polmagnete 6 bezüglich der Rotorachse gegenüberliegen.

Die Polmagnete 6 in dem Rotor können sowohl als Oberflächenmagnete als auch als vergrabene Magnete, die in Ausnehmungen in der Oberfläche des Rotors 5 eingebettet sind, ausgeführt werden. Die Verwendung von im Rotor vergrabenen Magneten ist vorteilhaft, da einfache und kostengünstige Magnetformen, wie z.B. mit ebenen Oberflächen, verwendet werden können, und ermöglicht eine einfache Rotorkonstruktion ohne Bandage und Korrosionsschutz.

Die Statorzähne 2 sind von Statorspulen 7 umgeben, die jeweils zwei Statorzähne umschließen. Der Übersichtlichkeit halber sind in Fig. 1 nur eine Statorspule 7 dargestellt. Es sind 18 Statorspulen 7 vorgesehen, wobei jeweils benachbarte zwei Statorzähne 2 umschließende Statorspulen 7 des Stators 3 um jeweils einen Statorzahn 2 zueinander versetzt angeordnet sind. Um Radialkraftwellen einer 1. Ordnung zu reduzieren bzw. auszulöschen, werden drei Statorspulen eines Stranges nochmals um 180° um den Rotor versetzt bzw. spiegelbildlich vorgesehen. Dabei werden gleichzeitig die bei solchen Motoren auftretenden Rastmomente nicht wesentlich gegenüber denjenigen eines 9/8-Synchronmotors erhöht.

Da ein solcher Synchronmotor im Gegensatz zu einem 9/8-Synchronmotor einen spiegelsymmetrischen Aufbau besitzt und die Nutzahl, die sich aus den Abständen zwischen zwei benachbarten Statorzähnen ergibt, doppelt so groß ist, ist die gesamte Anordnung weniger empfindlich gegenüber Symmetrieabweichungen aufgrund von Fertigungstoleranzen. Aufgrund dieser geringeren Empfindlichkeit gegenüber Toleranzen ist es möglich die Magnete auch in Taschen im Rotor unterzubringen. Dies ermöglicht eine einfache Rotorkonstruktion und den Einsatz preisgünstiger Quadermagnete.

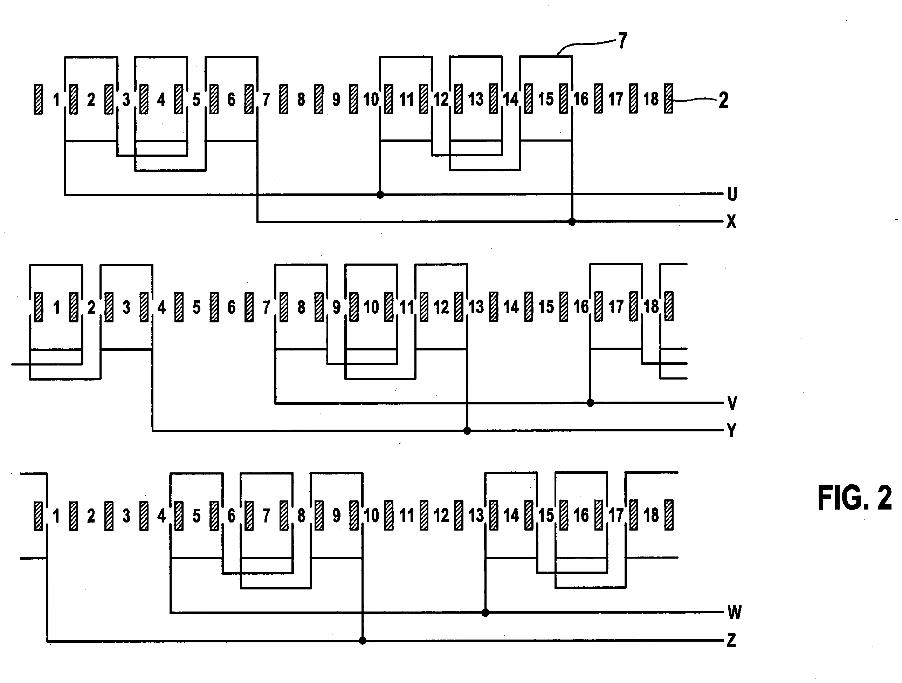

In Fig. 2 ist eine übersichtlichere Darstellung der Statorspulen 7 um die 18 Statorzähne 2 dargestellt. Die Statorzähne 2 sind aufgerollt in einer Reihe nebeneinander dargestellt. Der besseren Übersichtlichkeit halber werden die zu verschiedenen Phasen gehörenden Statorspulen 7 getrennt voneinander untereinander dargestellt.

In Fig. 2 sieht man, dass jede Phase sechs Statorspulen um zwei einander bezüglich des Rotors 5 gegenüberliegende drei benachbarte Statorzahnpaare ansteuert, so dass jeweils zwei gegenüberliegende Dreiergruppen von drei Statorspulen 7 mit einer Phase angesteuert werden. Die mittlere Statorspule 7 jeder Dreiergruppe von Statorspulen 7 wird mit einer bezüglich der äußeren Statorspulen 7 umgekehrten Polung (Richtung) angesteuert.

Diese zu den drei Phasen gehörenden Statorspulengruppen lassen sich nun in Sternschaltung oder in einer Dreiecksschaltung miteinander verbinden. Bei einer Sternschaltung sind die Anschlüsse X, Y und Z miteinander verbunden und die drei Phasenspannungen an die Anschlüsse U, V und W entsprechend angelegt. Analog sind bei einer Dreiecksschaltung die Anschlüsse X und V, Y und W, sowie Z und U miteinander verbunden und die so gebildeten Knoten stellen die entsprechenden Anschlüsse für die Phasenspannungen des Synchronmotors dar.

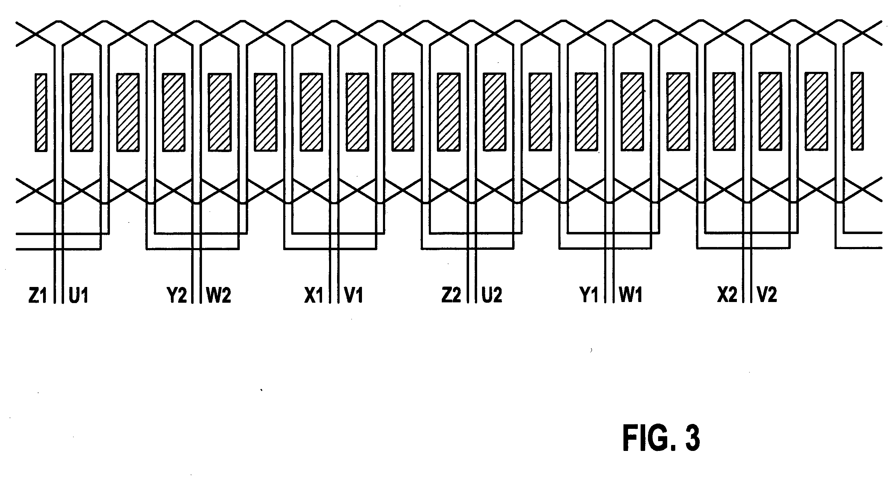

Im Folgenden werden weitere Möglichkeiten der Verschaltungen von Statorspulen beschrieben, bei denen jede der in Fig. 2 gezeigten Dreiergruppen von Statorspulen getrennt betrachtet wird. In Fig. 3 sind zur nachfolgenden Erläuterung von verschiedenen Verschaltungsarten die Bezeichnungen der verschiedenen Anschlüsse U1, V1, W1, X1, Y1, Z1, U2, V2, W2, X2, Y2, Z2 definiert.

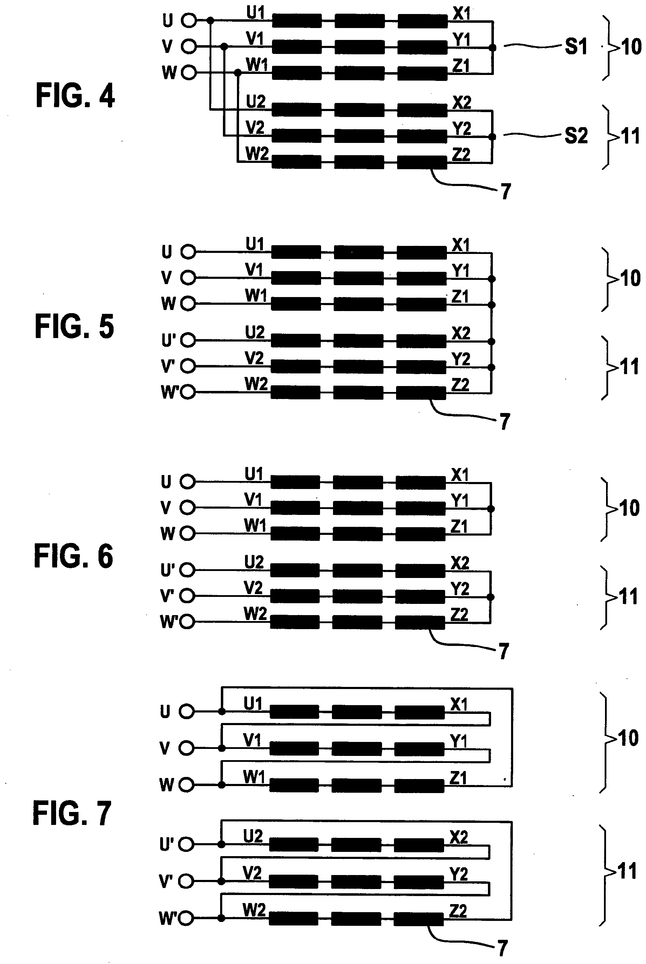

Ausgehend von der Fig. 3 vorgesehenen Anordnung von Statorspulen können die Statorspulengruppen wie in Fig. 4 gezeigt in einer Sternschaltung mit zwei Teilsternpunkten S1, S2 miteinander verbunden sein. Dabei werden im Prinzip drei um zueinander um 120° versetzte Dreiergruppen von Statorspulen 7 mit verschiedenen Phasen in einer Sternschaltung mit einem gemeinsamen ersten Teilsternpunkt S1 zu einem ersten Teilsystem 10 verschaltet und die ebenfalls zueinander um 120° versetzten Dreiergruppen von Statorspulen 7 über einen gemeinsamen zweiten Teilsternpunkt S2 miteinander zu einem zweiten Teilsystem 11 verschaltet. Die Teilsysteme 10, 11 sind zueinander um 180° um den Rotor versetzt bzw. spiegelbildlich zum Rotor angeordnet. Die Ansteuerung erfolgt über drei gemeinsame Phasenspannungen U, V, W an entsprechenden Phasenanschlüssen, wobei zwei einander gegenüberliegende Dreiergruppen von Statorspulen 7 mit der gleichen Phasenspannung angesteuert werden.

Bei der Ausführungsform der Fig. 5 sind alle Dreiergruppen bei einem gemeinsamen Sternpunkt miteinander verbunden, werden jedoch durch zwei voneinander getrennte Umrichter (nicht gezeigt) mit den jeweils drei Phasenspannungen U, V, W bzw. U', V', W' angesteuert. Die Anordnung entspricht im wesentlichen der gleichen wie in Fig. 4, so dass drei benachbarte Dreiergruppen von Statorspulen mit drei Phasenspannungen U, V, W, die von einem ersten Umrichter an den entsprechenden Phasenanschlüssen bereitgestellt werden, angesteuert werden und die dazu gegenüberliegenden drei Dreiergruppen von Statorspulen mit den entsprechenden drei Phasenspannungen U', V', W' eines zweiten Umrichters angesteuert werden.

Fig. 6 stellt eine Weiterbildung der Ausführungsform der Fig. 5 dar, die sich dadurch unterscheidet, dass der gemeinsame Sternpunkt aufgetrennt ist, und zwei Teilsysteme 10, 11 mit zwei Teilsternpunkten S1, S2 vorgesehen sind, so dass jeweils ein Umrichter eines der Teilsysteme 10, 11 ansteuert.

Die Ausführungsform der Fig. 7 zeigt im Prinzip eine zur Ausführungsform der Fig. 6 äquivalente Darstellung, wobei die voneinander unabhängigen Schaltungen der drei Dreiergruppen von Statorspulen 7 nicht als Teilsternschaltungen, sondern als Teildreiecksschaltungen verschaltet sind. Auch in Fig. 7 werden zwei vollständig voneinander getrennte Teilsysteme 10, 11 gebildet, die sich am Stator 3 des Synchronmotors 1 gegenüberliegen.

Um weiterhin zu gewährleisten, dass Kurzschlüsse zwischen den einzelnen elektrisch voneinander getrennten Systemen weitestgehend vermieden werden, können die Statorspulen 7 der zu einem der Teilsysteme 10, 11 gehörenden Dreiergruppen räumlich vollständig voneinander getrennt sind. Bei den zuvor beschriebenen Ausführungsformen umschließen Statorspulen 7 beider Teilsysteme gemeinsame Statorzähne 2, und es kann somit zwischen den beiden Teilsystemen im Falle von Kurzschlüssen zu Verbindungen kommen, so dass ein größeres Bremsmoment hervorgerufen werden kann.

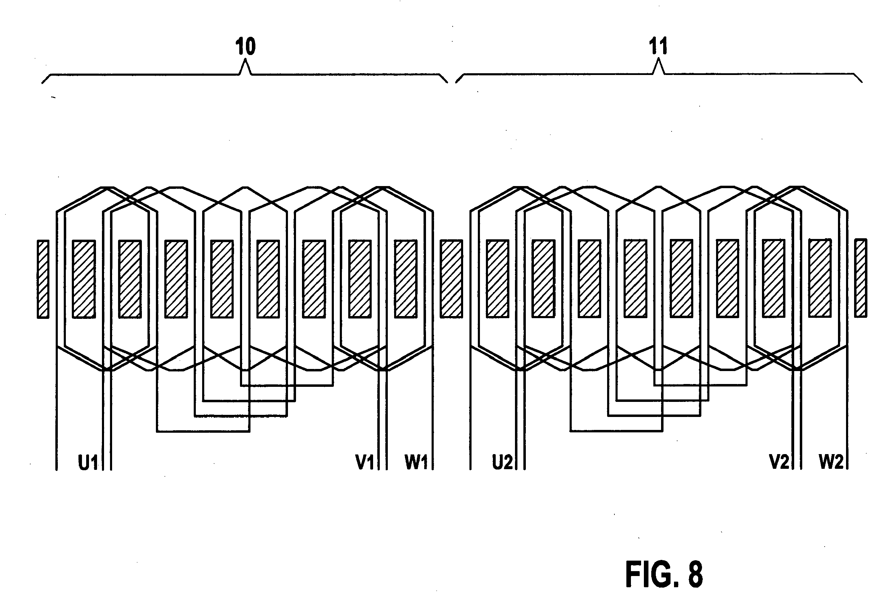

Wie aus Fig. 8 gemäß einem Beispiel ersichtlich ist, ist es möglich, Statorspulen 7 so vorzusehen, dass die in den Fig. 4, 5, 6 und 7 dargestellten Teilsysteme 10, 11 mit den jeweiligen Statorspulen 7 vollständig voneinander getrennt sind, so dass keine der Statorspulen 7 eines der Teilsysteme 10, 11 denselben Statorzahn 2 wie eine der Statorspulen 7 des anderen Teilsystems 10, 11 umschließt. Dies wird erreicht, indem die beiden Teilsystem räumlich jeweils in einer Hälfte des Synchronmotors angeordnet sind. Dies wird erreicht, indem Statorspulen 7, die drei Statorzähne 2 umschließen, und Statorspulen mit veränderter Windungszahl vorgesehen sind.

Jedes auf einer Hälfte des Synchronmotors angeordnetes Teilsystem weist drei Statorspulengruppen an acht nebeneinander angeordneten Statorzähnen 2 auf. Dabei entspricht die mittlere der drei Statorspulengruppen in ihrem Aufbau einer Dreiergruppe gemäß den zuvor gezeigten Ausführungsformen und ist an den sechs mittleren der acht nebeneinander angeordneten Statorzähnen 2 angeordnet. Die beiden, bezüglich der acht nebeneinander angeordneten Statorzähnen 2 äußeren Statorspulengruppen weisen jeweils nur zwei Statorspulen 7 auf. Eine der zwei Statorspulen weist die doppelte Windungszahl wie die Statorspulen der Dreiergruppe und auf und umschließt zwei Statorzähne 2. Die entsprechend andere Statorspule 7 weist eine einfache Windungszahl aus und umschließt drei Statorzähne 2. Die beiden Statorspulen 7, die jeweils drei Statorzähne 2 umschließen, sind nebeneinander nicht überlappend an den Statorzähnen 2 der mittleren Dreiergruppe angeordnet. Auf diese Weise wird erreicht, dass sich in jeder Nut zwischen den Statorzähnen 2 die gleiche Anzahl von Wicklungsdrähten befindet.

Gemäß einem weiteren Beispiel ist der 18/8-Synchronmotor auch als 9-Phasenmaschine ausführbar, in der jede der 18 Statorspulen getrennt verschaltbar ist. In diesem Fall lassen sich einander gegenüberliegende Statorspulen mit einer Phase betreiben.

Ein Synchronmotor gemäß den oben vorgeschlagenen Ausführungsformen hat ein deutlich reduziertes Rastmoment und erzeugt geringere Radialkraftwellen beim Betrieb. Aus diesem Grunde eignen sich derartige Synchronmotoren für den Einsatz in Lenksystemen für Kraftfahrzeuge.

## Patentansprüche

1. Synchronmotor mit einem Stator (3) mit 18 Statorzähnen (2), wobei Statorspulen (7) vorgesehen sind, die Statorzähne (2) umschließen, und wobei 8 Polmagnete (6) am Rotor (5) angeordnet sind,
**wobei** jede der Statorspulen (7) mindestens zwei Statorzähne (2) umschließt, **dadurch gekennzeichnet, dass jeweils drei Statorspulen (7), die drei zueinander benachbarte Statorzahnpaare umschließen, in Reihe zu einer Dreiergruppe verschaltet sind und über eine gemeinsame Phase ansteuerbar sind.**

2. Synchronmotor nach Anspruch 1, **dadurch gekennzeichnet, dass** jeder der Statorzähne (2) von mindestens zwei Statorspulen (7) umschlossen ist, die jeweils weiterhin die dem entsprechenden Statorzahn (2) beiderseits benachbarten Statorzähne (2) umschließen.

3. Synchronmotor nach Anspruch 11, **dadurch gekennzeichnet, dass** jeweils um **elektrisch** 120° zueinander versetzte Dreiergruppen über drei Phasenanschlüsse ansteuerbar sind und jeweils in einer Teilsternschaltung verschaltet sind.

4. Synchronmotor nach Anspruch 3, **dadurch gekennzeichnet, dass** die Teilsternschaltungen entweder mit zwei Umrichtern oder mit einem gemeinsamen Umrichter verbunden sind.

5. Synchronmotor nach Anspruch 1,wobei jeweils um **elektrisch** 120° zueinander versetzte Dreiergruppen über drei Phasenanschlüsse ansteuerbar sind und jeweils in einer Teildreiecksschaltung verbunden sind.

6. Synchronmotor nach Anspruch 5, **dadurch gekennzeichnet, dass** die Teildreiecksschaltungen entweder mit zwei Umrichtern oder mit einem gemeinsamen Umrichter verbunden sind.

7. Synchronmotor nach einem der Ansprüche 1 bis 6, **dadurch gekennzeichnet, dass** Polmagnete (6) in am Rotor (5) angeordnete Taschen eingebettet sind.

8. Verwendung eines Synchronmotors nach einem der Ansprüche 1 bis 7 in einem Lenksystem eines Kraftfahrzeugs.

## Claims

1. Synchronous motor having a stator (3) with 18 stator teeth (2), wherein stator coils (7) are provided which enclose stator teeth (2), and wherein 8 pole magnets (6) are arranged on the rotor (5),
wherein each of the stator coils (7) encloses at least two stator teeth (2),
**characterized in that** in each case three stator coils (7) enclose the three stator tooth pairs which are adjacent to one another, are connected in series with a group of three and can be actuated via a common phase.

2. Synchronous motor according to Claim 1, **characterized in that** each of the stator teeth (2) is enclosed by at least two stator coils (7) which furthermore enclose the stator teeth (2) which are adjacent to the corresponding stator tooth (2) on each side.

3. Synchronous motor according to Claim 1, **characterized in that** groups of three which are each offset electrically with respect to one another by 120° can be actuated via three phase connections and are each connected in a partial star connection.

4. Synchronous motor according to Claim 3, **characterized in that** the partial star connections are connected either to two inverters or to a common inverter.

5. Synchronous motor according to Claim 1, wherein groups of three which are each offset electrically with respect to one another by 120° can be actuated via three phase connections and are each connected in a partial delta connection.

6. Synchronous motor according to Claim 5, **characterized in that** the partial delta connections are connected either to two inverters or to a common inverter.

7. Synchronous motor according to one of Claims 1 to 6, **characterized in that** pole magnets (6) are embedded in pockets which are arranged on the rotor (5).

8. Use of a synchronous motor according to one of Claims 1 to 7 in a steering system of a motor vehicle.

## Revendications

1. Moteur synchrone comprenant un stator (3) pourvu de 18 dents de stator (2), des bobines de stator (7) étant présentes, lesquelles entourent des dents de stator (2), et 8 aimants polaires (6) étant disposés sur le rotor (5)
chacune des bobines de stator (7) entourant au moins deux dents de stator (2),
**caractérisé en ce que** trois bobines de stator (7), lesquelles entourent trois paires de dents de stator voisines les unes des autres, sont respectivement branchées en série en un groupe de trois et peuvent être excitées par le biais d'une phase commune.

2. Moteur synchrone selon la revendication 1, **caractérisé en ce que** chacune des dents de stator (2) est entourée par au moins deux bobines de stator (7), lesquelles entourent respectivement en plus les dents de stator (2) voisines des deux côtés de la dent de stator (2) correspondante.

3. Moteur synchrone selon la revendication 1, **caractérisé en ce que** les groupes de trois respectivement décalés électriquement de 120° les uns par rapport aux autres peuvent être excités par le biais de trois bornes de phase et sont respectivement branchés en un circuit en étoile partielle.

4. Moteur synchrone selon la revendication 3, **caractérisé en ce que** les circuits en étoile partielle sont reliés à deux convertisseurs ou à un convertisseur commun.

5. Moteur synchrone selon la revendication 1, dans lequel des groupes de trois respectivement décalés électriquement de 120° les uns par rapport aux autres peuvent être excités par le biais de trois bornes de phase et sont respectivement branchés en un circuit en triangle partiel.

6. Moteur synchrone selon la revendication 5, **caractérisé en ce que** les circuits en triangle partiel sont reliés à deux convertisseurs ou à un convertisseur commun.

7. Moteur synchrone selon l'une des revendications 1 à 6, **caractérisé en ce que** des aimants polaires (6) sont noyés dans des poches disposées sur le rotor (5).

8. Utilisation d'un moteur synchrone selon l'une des revendications 1 à 7 dans un système de direction d'un véhicule automobile.
